# EUROPEAN PATENT APPLICATION

(11) **EP 2 757 331 A1**
(43) Date of publication of application: **23.07.2014**
(21) Application number: 13151641.1
(22) Date of filing: 17.01.2013
(51) Int. Cl.: F24J 2/05, F24J 2/18

(54) **Heat receiver tube with internal sunlight reflector unit, solar collector with the heat receiver tube and use of the solar collector**

(71) Applicant: Siemens Concentrated Solar Power Ltd., 99107 Beit Shemesh (Industrial Area West) (IL)
(72) Inventor: Sagie, Dan, 84750 Beer-Sheva 84750 (IL)
(74) Representative: Maier, Daniel Oliver

(57) **Abstract**

A heat receiver tube for absorbing solar energy and for transferring absorbed solar energy to a heat transfer fluid which can be located inside at least one core tube of the heat receiver tube is provided. The heat receiver tube comprises following limitations: The core tube comprises a core tube surface with at least one solar energy absorptive coating for absorbing solar radiation of the sunlight. The core tube is enveloped by at least one enveloping tube. The enveloping tube comprises at least one enveloping tube wall which is transparent for the solar radiation. The enveloping tube wall comprises at least one inner enveloping tube surface. The core tube and the enveloping tube are coaxially arranged to each other with an inner heat receiver tube space which is bordered by the core tube surface and the inner enveloping tube surface. At least one internal sunlight reflector unit with at least one internal sunlight reflecting surface for directing sunlight radiation to the core tube surface is arranged in the inner heat receiver tube space. The solar collector comprises a parabolic mirror having a sunlight reflecting mirror surface for directing sunlight to a focal line of the sunlight reflecting mirror surface. The heat receiver tube is arranged in the focal line of the sunlight reflecting mirror surface such that at sunlight which is reflected by the mirror surface strikes the internal reflecting surface.

## Description

### BACKGROUND OF THE INVENTION

### 1. Field of the invention

This invention relates to a heat receiver tube, a solar collector with the heat receiver tube and a use of the solar collector.

### 2. Description of the related art

A sun energy collecting unit (solar collector) of a sun field power plant based on the concentrated solar power technique is for instance a solar collector with a parabolic mirror and a heat receiver tube. The heat receiver tube is arranged in a focal line of a sunlight reflecting surface of the mirror. By the sunlight reflecting surface sunlight is collected and focused to the heat receiver tube.

The heat receiver tube comprises a core tube (inner tube) which is filled with a heat transfer fluid, e.g. a thermo-oil or molten salt. With the aid of a solar radiation absorptive coating of the core tube the heat receiver tube absorbs energy from the sun. Energy from the sun is efficiently coupled into the heat transfer fluid. Solar energy is converted to thermal energy.

In order to minimize a loss of thermal energy, the heat receiver tube comprises an encapsulating enveloping tube which envelopes the core tube. The enveloping tube (e.g. enveloping tube), which is transparent for the sunlight, is arranged coaxially around the inner core tube of the heat receiver tube. The space between the inner tube and the enveloping tube is evacuated, to minimize convection.

The greater an area of the sunlight reflecting surface of the parabolic mirror the higher the potential collected solar energy. Unfortunately, the greater the area of the sunlight reflecting surface the lower an accuracy of the sunlight reflecting surface. This leads to the problem that a probability for misdirecting sunlight by the sunlight reflecting surface increases. A sunlight radiation which is reflected by the sunlight reflecting surface of the mirror doesn't strike the core tube of the heat receiver tube. A part of the reflected sunlight is lost for the energy conversion.

### SUMMARY OF THE INVENTION

It is an object of the invention to reduce the part of lost solar radiation in comparison to the state of the art.

Further objects of the invention are the providing of a solar collector with the heat receiver tube and the providing of a use of the solar collector.

These objects are achieved by the invention specified in the claims.

A heat receiver tube for absorbing solar energy and for transferring absorbed solar energy to a heat transfer fluid which can be located inside at least one core tube of the heat receiver tube is provided. The heat receiver tube comprises following limitations:
- The core tube comprises a core tube surface with at least one solar energy absorptive coating for absorbing solar radiation of the sunlight. The core tube is enveloped by at least one enveloping tube which is at least partly transparent for the solar radiation.
- The enveloping tube comprises at least one enveloping tube wall which is transparent for the solar radiation.
- The enveloping tube wall comprises at least one inner enveloping tube surface.
- The core tube and the enveloping tube are coaxially arranged to each other with an inner heat receiver tube space which is bordered by the core tube surface and the inner enveloping tube surface and
- at least one internal sunlight reflector unit with at least one internal sunlight reflecting surface for directing sunlight radiation to the core tube surface is arranged in the inner heat receiver tube space.

The internal reflector unit comprises at least one internal mirror. The sunlight reflecting surface comprises a mirror surface of the mirror.

For instance, the inner core tube is out of stainless steel. The enveloping tube which is transparent for the sunlight (transmission for specific wavelengths more the 90%) is arranged coaxially around the inner core tube of the heat receiver tube. The enveloping tube is preferably out of glass. But other transparent materials are possible, too.

Moreover a solar collector is provided. The solar collector comprises
- at least one parabolic mirror having a sunlight reflecting mirror surface for directing sunlight to a focal line of the sunlight reflecting mirror surface and
- at least one such heat receiver tube which is arranged in the focal line of the sunlight reflecting mirror surface, wherein
- the heat receiver tube is arranged in the focal line of the sunlight reflecting mirror surface such that at least a part of sunlight which can be reflected by the mirror surface can be directed to the core tube surface of the core tube of the heat receiver tube. Preferably the internal sunlight reflector unit is averted to the sunlight reflecting mirror surface.

Thereby it is not necessary, that the heat receiver tube is exactly located in the focal line of the mirror. Aberrations from an exact arrangement in the focal line are possible, too.

The mirror is a parabolic mirror with a parabolic shaped sunlight reflecting mirror surface. Alternatively the mirror is a Fresnel mirror.

Finally a use of the solar collector in a solar thermal power plant for converting solar energy into electrical energy is disclosed. Thereby an absorbing of the sunlight energy is carried out with the aid of the solar collector.

Solar radiation is converted into thermal energy of a heat transfer fluid which is located in the core tube. The heat transfer fluid is a thermo-oil or a molten salt. Via a heat exchanger thermal energy of the heat transfer fluid is used to produce steam. This steam drives a turbine which is connected to a generator. The generator produces current.

With the aid of the internal reflecting unit the drawback of reduced accuracy based on a large aperture of the sunlight reflecting surface area can be compensated. The part of the sunlight which is reflected by the sunlight reflecting surface and which wouldn't strike the absorptive coating without the internal reflecting unit of the core tube is reduced. In comparison to the state of the art the efficiency of the collecting sunlight is higher. It is not necessary to increase a diameter of the core tube in order to collect misdirected solar radiation.

### BRIEF DESCRIPTION OF THE DRAWINGS

Further features and advantages of the invention are produced from the description of an exemplary embodiment with reference to the drawings. The drawings are schematic.

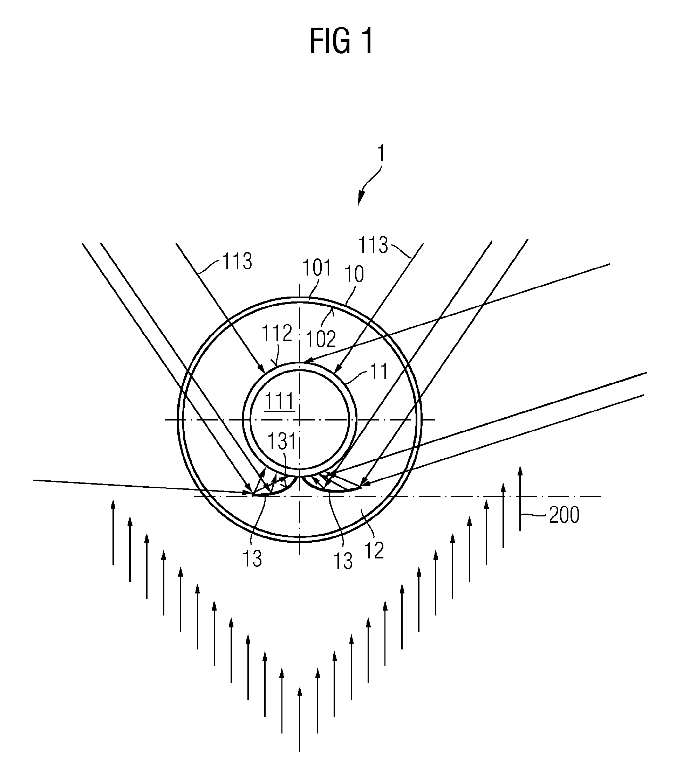

Figure 1 shows a cross section of a heat receiver tube from the side.

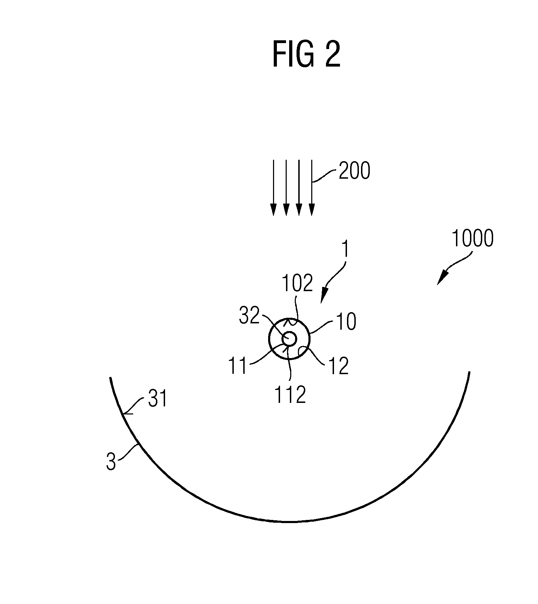

Figure 2 shows a cross section of a parabolic through collector with the heat receiver tube.

### DETAILED DESCRIPTION OF THE INVENTION

Given is a heat receiver tube 1. The heat receiver tube 1 comprises a core tube 11 stainless steel. The core tube 11 comprises a core tube surface 112 with at least one solar energy absorptive coating for absorbing solar radiation 113 of the sunlight

In the core tube 11 a heat transfer fluid 111 can be located. The heat transfer fluid 111 is a thermo-oil. Alternatively the heat transfer fluid 111 is molten salt.

The enveloping tube 10 comprises a enveloping tube wall 101 out of glass. This enveloping tube wall is transparent for the solar radiation 113. The enveloping tube wall 101 comprises an inner enveloping tube surface 102, the external surface is coated by an AR layer (anti reflecting coating).

The core tube 11 and the enveloping tube 10 are coaxially arranged to each other. The core tube surface 112 and the inner enveloping tube surface 102 arranged face to face. By this an inner heat receiver tube space 12 results which is bordered by the core tube surface 112 and the inner enveloping tube surface 102.

Internal sunlight reflector units 13 with internal sunlight reflecting surfaces 131 for directing sunlight radiation to the core tube surface 112 are arranged in the inner heat receiver tube space 12.

The heat receiver tube 1 is part of a solar collector 1000. The solar collector 1000 comprises at least one parabolic mirror 3 with a sunlight reflective surface 31. By the reflective surface 31 sunlight is directed to the focal line 32 of the parabolic mirror 3. The concentrated sunlight is absorbed by the heat receiver tube 1.

The heat receiver tube 1 is arranged on the side of the incoming direct sunlight radiation 200.

The solar collector is used in a solar thermal power plant for converting solar energy into electrical energy. The heated heat transfer fluid is used to produce steam via a heat exchanger. The steam is driving a turbine, which is connected to a generator. The generator produces current.

## Claims

1. Heat receiver tube (1) for absorbing solar energy and for transferring absorbed solar energy to a heat transfer fluid (111) which can be located inside at least one core tube (11) of the heat receiver tube (1), wherein
- the core tube (11) comprises a core tube surface (112) with at least one solar energy absorptive coating for absorbing solar radiation of the sunlight;
- the core tube (11) is enveloped by at least one enveloping tube which is at least partly transparent for the solar radiation (10);
- the enveloping tube (10) comprises at least one enveloping tube wall (101) which is transparent for the solar radiation;
- the enveloping tube wall (101) comprises at least one inner enveloping tube surface (102);
- the core tube and the enveloping tube are coaxially arranged to each other with an inner heat receiver tube space which is bordered by the core tube surface and the inner enveloping tube surface; and
- at least one internal sunlight reflector unit with at least one internal sunlight reflecting surface for directing sunlight radiation to the core tube surface is arranged in the inner heat receiver tube space.

2. Heat receiver tube according to claim1, wherein the enveloping tube comprises glass.

3. Heat receiver tube according to claim 1 or 2, wherein the inner space is evacuated.

4. Heat receiver tube according to one of the claims 1 to 3 wherein the internal reflector unit comprises at least one internal mirror and the sunlight reflecting surface comprises a mirror surface of the mirror.

5. Solar collector (1000) comprising
- at least one mirror (3) having a sunlight reflecting mirror surface (31) for directing sunlight to a focal line (32) of the sunlight reflecting mirror surface (31); and
- at least one heat receiver tube (2) according to one of the claims 1 to 3 which is arranged in the focal line (32) of the sunlight reflecting mirror surface (31), wherein
- the heat receiver tube is arranged in the focal line of the sunlight reflecting mirror surface such that at least a part of sunlight which can be reflected by the mirror surface can strike the internal reflecting surface and can be directed to the core tube surface of the core tube of the heat receiver tube.

6. Solar collector according to claim 5, wherein the mirror is a parabolic mirror or a Fresnel mirror.

7. Solar collector according to claim 5 or 6, wherein the internal sunlight reflector unit is averted to the sunlight reflecting mirror surface.

8. Use of the solar collector according to one of the claims 4 to 7 in a solar thermal power plant for converting solar energy into electrical energy, wherein an absorbing of the sunlight energy is carried out with the aid of the solar collector.
